# EUROPEAN PATENT APPLICATION

(11) **EP 2 418 444 A2**
(43) Date of publication of application: **15.02.2012**
(21) Application number: 11176642.4
(22) Date of filing: 05.08.2011
(51) Int. Cl.: F25D 25/00, F25D 29/00

(54) **Storage container with sensor device and refrigerator having the same**

(30) Priority: 11.08.2010 KR 20100077391
(71) Applicant: Samsung Electronics Co., Ltd., Suwon-si, Gyeonggi-do 506-762 (KR)
(72) Inventor: Yun, Kwon Chul, Gwangju (KR); Kang, Seok Gin, Gyeonggi-do (KR); Bae, Hak Gyun, Gyeongsangbuk-do (KR); Park, Young Gwi, unknown (KR)
(74) Representative: Grünecker, Kinkeldey, Stockmair & Schwanhäusser

(57) **Abstract**

A storage container with a sensor device and a refrigerator having the same. A pair of electrode terminals is exposed from the lower surface of a sensor plate installed on the inner surface of the bottom of the storage container, thereby improving reliability in measurement.

## Description

### BACKGROUND

### 1. Field

Embodiments relate to a storage container with a sensor device to detect a state of food stored therein and a refrigerator having the same.

### 2. Description of the Related Art

In general, a refrigerator is an apparatus which is provided with a compressor, a condenser, an expansion valve, and an evaporator, and maintains freshness of various foods using movement of heat according to phase change of a refrigerant.

Recently, a kimchi refrigerator which matures kimchi and stores kimchi in a fresh stated using the above principle of the refrigerator has been developed.

The kimchi refrigerator properly matures kimchi according to change of seasons and user tastes, and then maintains the kimchi at a proper temperature so as to preserve a properly matured flavor of the kimchi for a long time.

Kimchi is a kind of food preserved with salt which has a long shelf life, and a kind of fermented food using microbial fermentation, simultaneously. Since the rate at which fermentation of kimchi caries according to salinity and temperature, a measurement device to measure a storage state of the kimchi, such as salinity, acidity, and temperature of the kimchi, is provided to enable optimization of storage conditions of the kimchi.

### SUMMARY

Therefore, it is an aspect to provide a refrigerator having a storage container with a sensor device to detect a state of food preserved with salt.

Additional aspects will be set forth in part in the description which follows and, in part, will be apparent from the description, or may be learned by practice of the invention.

In accordance with one aspect, a storage container with a sensor device having a pair of electrode terminals to measure a state of food stored therein, includes channels depressed on the inner surface of a bottom of the storage container such that a liquid component of the food may flow in the channels, and a sensor plate installed on the bottom of the storage container so as to cover a part of an opened upper surface of one of the channels, wherein the pair of electrode terminals is exposed from the lower surface of the sensor plate so as to contact the liquid component of the food flowing in the channels.

The storage container may further include a circuit module provided on the outer surface of the bottom of the storage container to analyze and communicate signals sensed by the pair of electrode terminals, and wires may be embedded in the bottom of the storage container so as to pass through the bottom of the storage container to electrically connect the pair of electrode terminals to the circuit module.

The pair of electrode terminals may include a reference electrode and an ion electrode to measure pH of the liquid component.

Each of the pair of electrode terminals may include a sensing part provided with one end exposed from the lower surface of the sensor plate, and a contact part exposed from the lower surface of the sensor plate at a position separated from the sensing part, and one end of each wire may be connected to the circuit module and the other end of each wire may contact the contact part.

The storage container may further include sealing members, each of which is arranged between the sensor plate and the bottom of the storage container around the contact part so as to prevent the liquid component of the food from being introduced into the contact part.

The circuit module may include a circuit board electrically connected with the wires, a battery electrically connected with the circuit board and a housing to accommodate the circuit board and the battery, and the housing may be detachably mounted in a receipt space provided on the outer surface of the bottom of the storage container.

The housing may be provided with a first receipt part to receive the circuit board and a second receipt part to receive the battery, the first receipt part and the second receipt part may be divided from each other, and the battery may be detachably received in the second receipt part.

The second receipt part may include an opening through which the battery is put into and taken out of the second receipt part, a cover to open and close the opening, and a sealing member to hermetically seal a gap between the second receipt part and the cover.

In accordance with another aspect, a refrigerator includes at least one storage container to store food, and a sensor device to measure a state of the food stored in each of the at least one storage container, respectively, wherein the sensor device includes a circuit module mounted on the outer surface of a bottom of the at least one storage container, terminals embedded in the bottom of the at least one storage container such that one end of each terminal is exposed from the inner surface of the bottom of the at least one storage container to be electrically connected with the circuit module, and a sensor plate provided with a pair of electrode terminals contacting a liquid component of the food, and installed on the bottom of the at least one storage container. Here, each of the pair of electrode terminals may include a sensing part exposed from the lower surface of the sensor plate so as to face the bottom of the at least one storage container.

Channels in which the liquid component flows may be provided on the inner surface of the bottom of the at least one storage container, and the sensing part may contact the liquid component flowing in the channels.

Each of the pair of electrode terminals may further include a contact part exposed from the lower surface of the sensor plate so as to contact each terminal exposed from the inner surface of the bottom of the at least one storage container, and the refrigerator may further include sealing members, each of which is arranged between the sensor plate and the bottom of the at least one storage container around the contact part so as to prevent the liquid component of the food flowing on the bottom of the at least one storage container from being introduced into the contact part.

The sensor device may include a pH sensor to measure acidity of the food.

A circuit module receipt part depressed so as to receive the circuit module may be provided on the outer surface of the bottom of the at least one storage container, and the circuit module may be detachably mounted in the circuit module receipt part.

The circuit module may include a housing provided with a first receipt part and a second receipt part divided from each other, a circuit board received in the first receipt part and electrically connected with the other end of each terminal, and a battery received in the second receipt part and electrically connected with the circuit board.

The second receipt part may include an opening through which the battery is put into and taken out of the second receipt part, and a cover to open and close the opening.

The refrigerator may further include a sealing member arranged between the bottom of the at least one storage container and the cover to hermetically seal the second receipt part.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a perspective view illustrating a schematic structure of a refrigerator in accordance with one embodiment;
FIG. 2 is a view illustrating a storage container of the refrigerator in accordance with the embodiment;
FIG. 3 is a sectional view taken along the line I-I of FIG. 2;
FIG. 4 is an exploded perspective view of a sensor plate in accordance with the embodiment; and
FIG. 5 is an exploded perspective view of a circuit module installed on the bottom of each storage container in accordance with the embodiment.

### DETAILED DESCRIPTION

Reference will now be made in detail to the embodiments, examples of which are illustrated in the accompanying drawings, wherein like reference numerals refer to like elements throughout. Hereinafter, a refrigerator in accordance with one embodiment will be described with reference to the accompanying drawings. Now, a kimchi refrigerator to store food preserved with salt will be exemplarily described as the refrigerator in accordance with the embodiment.

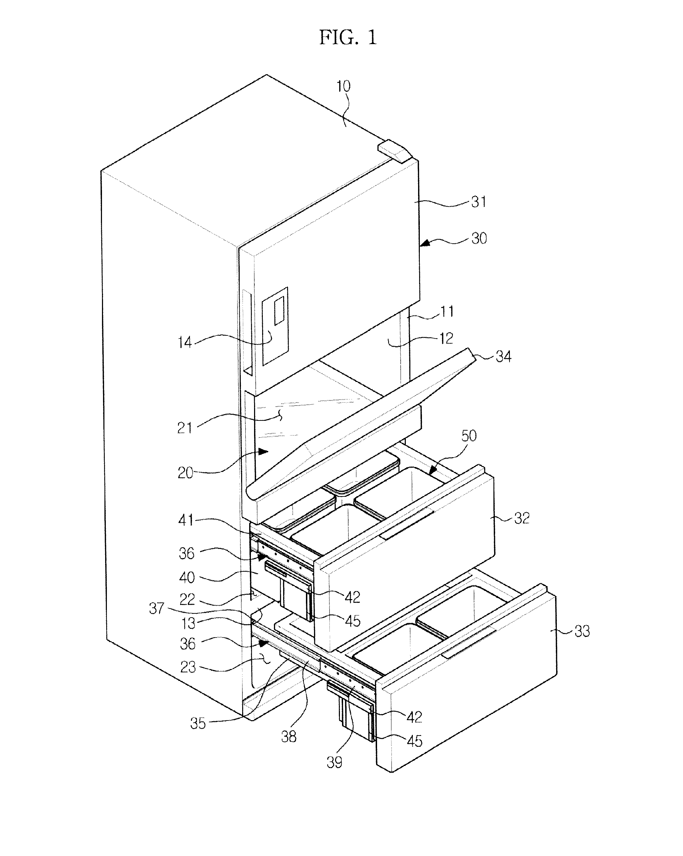

FIG. 1 is a perspective view illustrating a schematic structure of the refrigerator in accordance with the embodiment.

With reference to FIG. 1, the refrigerator in accordance with this embodiment includes a main body 10 forming a plurality of storage chambers 20, and doors 30 installed on the main body 30 so as to respectively open and close the plurality of storage chambers 20.

The main body 10 includes an external case 11 forming the external appearance of the main body 10, an internal case 12 installed in the external case 11 to form the plurality of storage chambers 20, and a machinery chamber (not shown) to receive a plurality of electric components.

A gap between the external case 11 and the internal case 12 is filled with a foaming agent to maintain insulation of the storage chambers 20.

The storage chambers 20 includes an upper storage chamber 21, an intermediate storage chamber 22, and a lower storage chamber 23, which are divided from each other by two horizontal diaphragms 13. The upper storage chamber 21, the intermediate storage chamber 22, and the lower storage chamber 23 respectively form independent storage spaces, and storage temperatures of the upper storage chamber 21, the intermediate storage chamber 22, and the lower storage chamber 23 are independently controlled according to amounts of cool air supplied to the respective storage chambers 21, 22, and 23.

An evaporator (not shown) in which a refrigerant flows to maintain the insides of the intermediate storage chamber 22 and the lower storage chamber 23 in a low temperature state is installed within the cases 11 and 12 forming the intermediate storage chamber 22 and the lower storage chamber 23. The evaporator contacts the inner wall of the internal case 12 so as to surround both side surfaces and lower surfaces of the respective storage chambers 22 and 23, thereby directly cooling the storage chambers 22 and 23.

Further, a heater (not shown) consisting of conventional electric heat wires to heat the insides of the intermediate storage chamber 22 and the lower storage chamber 23 so as to maintain the respective storage chambers 22 and 23 at a temperature proper for maturing of kimchi is installed between the external case 11 and the internal case 12.

A compressor (not shown) to compress the refrigerant and a condenser (not shown) to condense the refrigerant supplied from the compressor are installed in the machinery chamber, and the machinery chamber is separately divided from the storage chambers 20.

The doors 30 includes a rotary door 31 rotatably connected to the main body 10 to open and close the upper storage chamber 21, and drawer-type doors 32 and 33 slidably connected to the main body 10 to open and close the intermediate storage chamber 22 and the lower storage chamber 23.

The rotary door 31 is provided with a subsidiary door 34 rotated in the vertical direction around a lower hinge shaft (not shown) to open and close a portion of the upper storage chamber 21. The subsidiary door 34 serves as a rack on which an article may be placed at the maximal opened position thereof.

An operation panel 14 to select kinds, maturing times, and temperature conditions of food stored in the storage chambers 20 and then to display data regarding the selected factors is provided at one side of the rotary door 31.

Each of the drawer-type doors 32 and 33 is slid in the forward and backward direction of the storage chambers 22 and 23 by sliding units 36 so as to open and close each of the storage chambers 22 and 23, and a basket 40 is detachably attached to each of the drawer-type doors 32 and 33.

For this purpose, receipt frames 35, on which the basket 40 is received, are provided at both sides of the rear surface of each of the drawer-type doors 32 and 33, and the sliding unit 36 is installed on the receipt frames 35.

The sliding unit 36 is formed in a triple rail structure. That is, the sliding unit 36 includes first rails 37 fixed to both side walls of each of the storage chambers 22 and 23, second rails 38 received in the first rails 37 so as to move relative to the first rails 37, and third rails 39 received in the second rails 38 so as to move relative to the second rails 38 and fixed to the receipt frames 35.

Such a sliding unit 36 is made of stainless steel having high rigidity so as to support the basket 40 although heavy articles are loaded within the basket 40.

The sliding unit 36 further includes an automatic door closing device 42 to move each of the drawer-type doors 32 and 33 so as to allow each of the drawer-type doors 32 and 33 to close the storage chamber 22 or 23 when each of the drawer-type doors 32 and 33 reaches a designated position during sliding of each of the drawer-type doors 32 and 33.

The automatic door closing device 42 includes latching members (not shown) restricted by each other, and an elastic member (not shown) to attract each of the drawer-type doors 32 and 33. The automatic door closing device 42 causes each of the drawer-type doors 32 and 33 to be automatically closed by elastic force of the elastic member together with release of the restriction of the latching members, when each of the drawer-type doors 32 and 33 reaches the designated position.

The basket 40 is made of plastic, and is formed in the shape of a case with an opened upper surface.

Storage containers 50 to store food preserved with salt, such as kimchi, pickles, and salted seafood, are received in the basket 40, and flanges 41, extended outwards so as to allow the basket 40 to be detachably held to the receipt frames 35, are formed integrally with the upper ends of both side surfaces of the basket 40.

A subsidiary cooling member 45 being in area contact with both side surfaces and lower surface of the exterior of the basket 40 is provided at the front portion of the exterior of the basket 40.

The subsidiary cooling member 45 serves to reduce a temperature distribution deviation of the inside of the basket 40, and may be a plate made of a metal having high thermal conductivity, such as aluminum.

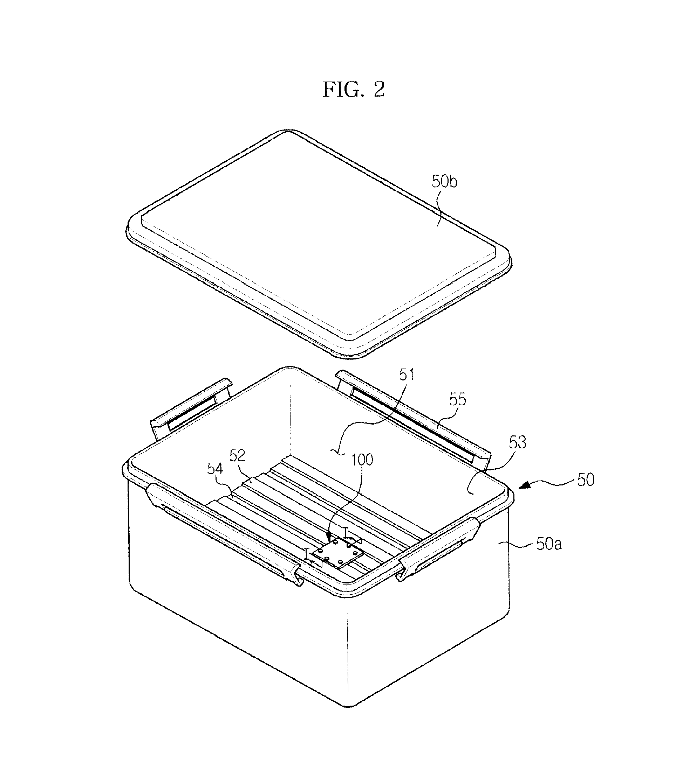

FIG. 2 is a view illustrating the storage container of the refrigerator in accordance with the embodiment.

With reference to FIG. 2, the storage container 50 includes a box-shaped container body 50a with a storage space 51 to receive food, and a container cover 50b detachably attached to the upper portion of the container body 50a to open and close the storage space 51.

The storage space 51 is provided with an opened upper portion, and is formed by a bottom 52 and a side wall 53 extended upwards from the edge of the bottom 52.

Levers 55 extended from the container body 50a are provided on the upper portion of the container body 50a, and a lever connection part (not shown), to which the levers 55 are connected, is provided on the edge of the container cover 50b

Further, a packing member (not shown), pressed onto the upper end of the container body 50a to hermetically seal the storage space 51 when the container body 50a and the container cover 50b are connected, is provided on the edge of the container cover 50b.

Food preserved with salt, which contains a liquid component, such as kimchi, is stored in the storage space 51 of the container body 50a, and a sensor device 100 mounted on the bottom 52 of the storage container 50 detects a state of the food preserved with salt.

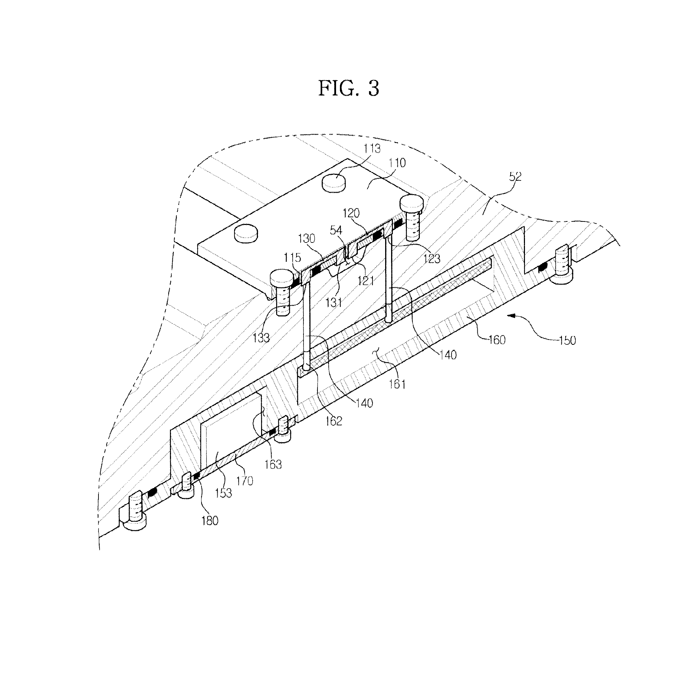

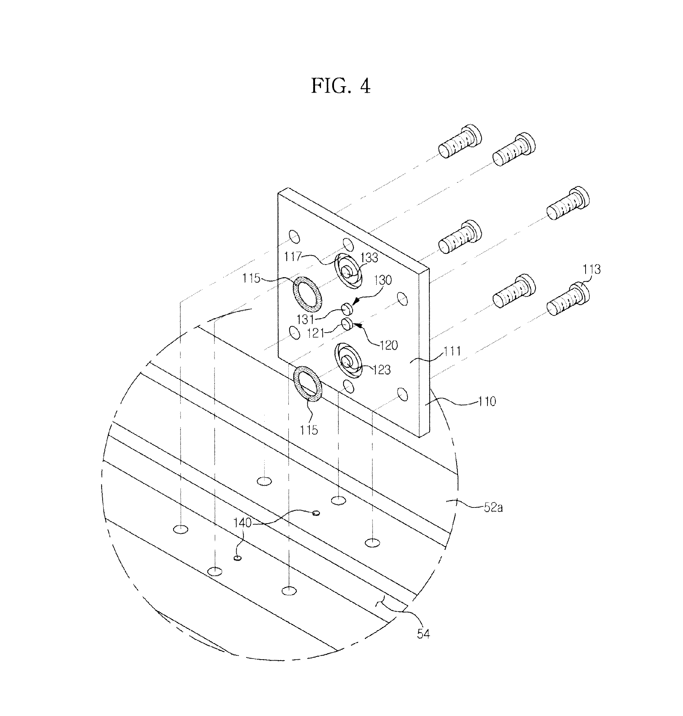

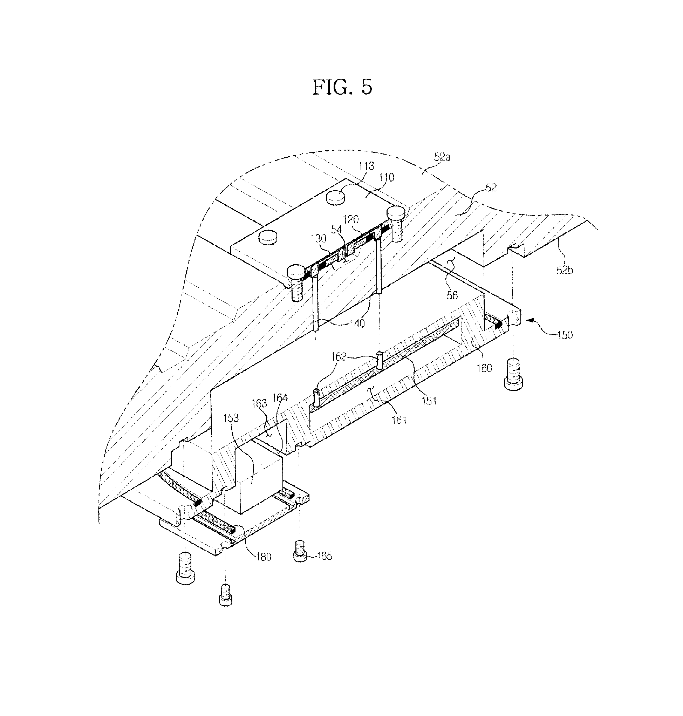

FIG. 3 is a sectional view taken along the line I-I of FIG. 2, FIG. 4 is an exploded perspective view of a sensor plate in accordance with the embodiment, and FIG. 5 is an exploded perspective view of a circuit module installed on the bottom of the storage container in accordance with the embodiment.

With reference to FIG. 3, the sensor device 100 in accordance with the embodiment may include a pH sensor to measure acidity of food stored in the storage container 50.

The sensor device 100 includes a pair of electrode terminals 120 and 130 provided on the internal surface of the storage container 50 and contacting a liquid component (for example, kimchi juice) of the food to measure acidity of the liquid component according to change of ions of the liquid component, a circuit module 150 provided on the external surface of the storage container 50, and terminals 140 embedded in the bottom 52 of the storage container 50 to electrically connect the pair of electrode terminals 120 and 130 to the circuit module 150.

The pair of the electrode terminals 120 and 130 includes a reference electrode 120 provided with an electric potential which does not change according to an ion concentration, and an ion electrode 130 to sense specific ions.

The ion electrode 130 is provided with an ion-selective membrane fixed to the end of the ion electrode 130 so as to directly contact the liquid component of food, and measures an electrochemical potential generated thereby, thus calculating an ion concentration.

The ion electrode 130 in this embodiment is a coated wire ion-selective electrode formed by coating the surface of a metal plate made of metal, such as platinum, with an ion-selective membrane made of a porous material. Such a coated wire ion-selective electrode is only an example, and well-known ion electrodes which use a glass membrane, other solid membranes, or liquid membranes as the ion-selective membrane may be used as the ion electrode 30.

With reference to FIG. 4, the pair of electrode terminals 120 and 130 is provided on a sensor plate 110 installed on an inner surface 52a of the bottom 52 of the storage container 50.

The sensor plate 110 is an approximately rectangular plate, the electrodes 120 and 130 are arranged on a lower surface 111 of the sensor plate 110 such that both ends of the electrodes 120 and 130 are exposed from the lower surface 111 of the sensor plate 110.

Both exposed ends of each of the electrodes 120 and 130 includes a sensing part 121 or 131 contacting the liquid component of food to measure acidity of the liquid component, and a contact part 123 or 133 electrically connected to the circuit module 150, which will be described later.

The sensing parts 121 and 131 are arranged so as to face the bottom 52, if the sensor plate 110 is mounted on the inner surface 52a of the bottom 52. This serves to prevent the sensing parts 121 and 131 from being damaged when the storage container 50 is washed or to reduce measurement errors generated due to direct contact of the sensing parts 121 and 131 with the liquid component of food during sensing.

The sensing parts 121 and 131 are separated from the inner surface 52a of the bottom 52 by a designated interval so as to sufficiently contact the liquid component of food present on the bottom 52.

For this purpose, channels 54 depressed to a designated depth are provided on the bottom 52 of the storage container 50 so as to allow the liquid component of food stored in the storage container 50 to flow therethrough.

A plurality of channels 54 is extended in the lengthwise direction of the bottom 52 so as to be separated from each other and to be arranged in parallel.

The sensor plate 110 is installed such that the lower surface of the sensor plate 110 is closely attached to the inner surface 52a of the bottom 52 through fastening members 113 made of a resin.

Here, the sensing parts 121 and 131 provided on the sensor plate 110 are arranged above the channel 54, and thus contact the liquid component of food flowing in the channel 54.

Further, the contact parts 123 and 133 exposed from the lower surface 111 of the sensor plate 110 contact exposed ends of the terminals 140 embedded in the bottom 52.

One end of each of the terminals 140 embedded in the bottom 52 of the storage container 50 is exposed from the inner surface 52a of the bottom 52, and the other end of each of the terminals 140 is exposed from an outer surface 52b of the bottom 52. These terminals 140 may be formed by insert molding during molding of the storage container 50.

Each of the contact parts 123 and 133 exposed from the sensor plate 110 is provided with a sealing member 115 to preventing the liquid component of food present on the bottom 52 from being introduced into each of the contacts parts 123 and 133.

The sealing members 115 may be O-rings received in sealing grooves 117 provided around the contact parts 123 and 133 exposed from the sensor plate 110. The sealing members 115 are closely attached to the lower surface 111 of the sensor plate 110 and the inner surface 52a of the bottom 52, if the sensor plate 110 is installed on the bottom 52, thereby maintaining a hermetically sealed state between the sensor plate 110 and the bottom 52.

Thereby, measurement of acidity of the liquid component at regions other than the sensing parts 121 and 131 may be prevented, or measurement errors generated due to submersion of the circuit module 150 under the liquid component leaked to the outer surface 52b of the bottom 52 along the terminals 140 embedded in the bottom 52 may be reduced.

Signals sensed by the sensing parts 121 and 131 are transmitted to the circuit module 150 provided on the outer surface 52b of the bottom 52 through the terminals 140 embedded in the bottom 52.

With reference to FIG. 5, the circuit module 150 includes a circuit board 151 on which a signal processing unit to measure an impedance variation between the reference terminal 120 and the ion electrode 130 and a communication unit to transmit/receive a signal processed by the signal processing unit are formed, and a battery 153 electrically connected with the circuit board 151.

The signal processing unit is a circuit to measure acidity (pH) using a potential difference between the reference electrode 120 and the ion electrode 130, and the communication unit is a circuit to transmit/receive a data value of the measured acidity (pH) to/from a control unit (not shown) of the main body 10.

The signal processing unit and the communication unit are integrally formed on the circuit board 151, and detailed circuit diagrams thereof may be achieved by a general circuit design technique and thus a description thereof will be omitted.

The circuit module 150 is detachably mounted on the outer surface 52b of the bottom 52 of the storage container 50 so as to be replaceable.

For this purpose, the circuit module 150 is provided with a housing 160 having receipt part 161 and 163 to receive the circuit board 151 and the battery 153, and the housing 160 is received in a circuit module receipt part 56 depressed on the outer surface 52b of the bottom 52 of the housing 160.

The receipt parts 161 and 163 include a first receipt part 161 and a second receipt part 163 divided from each other to receive the circuit board 151 and the battery 153, respectively.

The first receipt part 161 receives the circuit board 151, and the circuit board 151 received in the first receipt part 161 is electrically connected to the terminals 140 embedded in the bottom 52.

For this purpose, connection wires 162, which are connected to the ends of the terminals 140 exposed from the outer surface 52b of the bottom 52 when the housing 160 is mounted on the bottom 52 of the storage container 50, are embedded in the housing 160.

The second receipt part 163 receives the battery 153, and the battery 153 received in the second receipt part 163 is detachably mounted on the housing 160.

For this purpose, the second receipt part 163 includes an opening 164 through which the battery 153 is put into or taken out of the second receipt part 163, and a cover 170 to open and close the opening 164.

The cover 170 is connected to the housing 160 through bolts 165. The cover 170 is provided with a sealing member 180 to maintain a hermetically sealed state of the second receipt part 163.

The sealing member 180 is provided so as to surround the opening 164, and is closely attached between the housing 160 and the cover 170, if the cover 170 is connected to the housing 160.

The sealing member 180 prevents moisture from being introduced into a gap between the housing 160 and the cover 170, thereby improving reliability of the circuit module 150.

Although this embodiment exemplarily illustrates that only the battery 153 of the circuit module 150 is detachable, a circuit module 150 provided with a housing, in which only the connection wires 162 connected with the ends of the terminals 140 exposed from the outer surface 52b of the bottom 52 of the storage container 50 are exposed to the outside and the circuit board 151 and the rechargeable battery 153 are integrally sealed and received, may be prepared such that the whole of the circuit module 150 is detachably mounted on the storage container 50. In this case, in order to charge the battery 153, the circuit module 150 is separated from the storage container 50 and then the battery 153 is charged by wire or wirelessly. In the wired charging manner, a separate charging terminal may be provided or the connection wires 162 may be used as charging terminals, and in the wireless charging manner, an energy receipt unit to receive transmitted from a separate wireless charging terminal may be provided on the circuit module 150 so as to be used to charge the battery 153 (such a technique is disclosed in detail in Korean Patent Application No. 2010-0059911 filed by the applicant of the present invention).

The spirit of the embodiment of the present invention is not limited to the above description, and may include various modifications, which will be described later.

Although the sensor device 100 in accordance with the embodiment includes the pH sensor to measure acidity of food stored in the storage container 50, the sensor device 100 may include a salinity sensor to measure salinity of food.

In this case, a pair of the electrode terminals 120 and 130 may include electrical conductivity sensors operating based upon the principle of changes in electrical conductivity due to change in ion concentration of stored food.

That is, salinity of food flowing in the channel 54 is measured by measuring an intensity of current flowing when a designated voltage is applied to the pair of the electrode terminals 120 and 130 contacting a liquid component of the food.

Here, the pair of the electrodes 120 and 130 is made of a material having an anti-corrosion property, and the circuit board 151 electrically connected to the pair of the electrodes 120 and 130 through the terminals 140 includes a measurement circuit to measure salinity.

Also, in this case, the pair of the electrodes 120 and 130 does not directly contact food stored in the storage container 50, thereby facilitating a washing operation using a washing solution flowing in the channels 54 during washing of the storage container 50 as well as improving reliability in measurement.

As is apparent from the above description, a sensor device in accordance with one embodiment improves reliability in measurement.

Although a few embodiments have been shown and described, it would be appreciated by those skilled in the art that changes may be made in these embodiments without departing from the principles and spirit of the invention, the scope of which is defined in the claims and their equivalents.

## Claims

1. A storage container with a sensor device having a pair of electrode terminals to measure a state of food stored therein, comprising:
channels depressed on the inner surface of a bottom of the storage container such that a liquid component of the food may flow in the channels; and
a sensor plate installed on the bottom of the storage container so as to cover a part of an opened upper surface of one of the channels,
wherein the pair of electrode terminals is exposed from the lower surface of the sensor plate so as to contact the liquid component of the food flowing in the channels.

2. The storage container according to claim 1, further comprising a circuit module provided on the outer surface of the bottom of the storage container to analyze and communicate signals sensed by the pair of electrode terminals,
wherein wires are embedded in the bottom of the storage container so as to pass through the bottom of the storage container to electrically connect the pair of electrode terminals to the circuit module.

3. The storage container according to claim 1, wherein the pair of electrode terminals includes a reference electrode and an ion electrode to measure pH of the liquid component.

4. The storage container according to claim 2 or 3, wherein:
each of the pair of electrode terminals includes a sensing part provided with one end exposed from the lower surface of the sensor plate, and a contact part exposed from the lower surface of the sensor plate at a position separated from the sensing part; and
one end of each wire is connected to the circuit module, and the other end of each wire contacts the contact part.

5. The storage container according to claim 4, further comprising sealing members, each of which is arranged between the sensor plate and the bottom of the storage container around the contact part so as to prevent the liquid component of the food from being introduced into the contact part.

6. The storage container according to claim 2, wherein:
the circuit module includes a circuit board electrically connected with the wires, a battery electrically connected with the circuit board, and a housing to accommodate the circuit board and the battery; and
the housing is detachably mounted in a receipt space provided on the outer surface of the bottom of the storage container.

7. The storage container according to claim 6, wherein the housing is provided with a first receipt part to receive the circuit board and a second receipt part to receive the battery, the first receipt part and the second receipt part are divided from each other, and the battery is detachably received in the second receipt part.

8. The storage container according to claim 2, wherein the second receipt part includes an opening through which the battery is put into and taken out of the second receipt part, a cover to open and close the opening, and a sealing member to hermetically seal a gap between the second receipt part and the cover.

9. A refrigerator having the storage container according to any one of claims 1 to 8.
